Europäisches Patentamt

European Patent Office

Office européen des brevets

(11) Numéro de publication: **0 293 030**
**A1**

## (12) DEMANDE DE BREVET EUROPEEN

(21) Numéro de dépôt: 88200913.7

(22) Date de dépôt: 09.05.88

(51) Int. Cl.⁴: **B32B 27/08** , **E04B 1/64**

(30) Priorité: 22.05.87 FR 8707296

(43) Date de publication de la demande:
**30.11.88 Bulletin 88/48**

(84) Etats contractants désignés:
**AT BE CH DE ES FR GB GR IT LI LU NL SE**

(71) Demandeur: PLAVINA & CIE (SOCIETE EN NOM COLLECTIF)
Rue du Prince Albert, 44
B-1050 Bruxelles(BE)

(72) Inventeur: **Buckens, Jean-Marie**
Nestor de Tièrestraat, 60
B-9700 Oudenaarde(BE)
Inventeur: **Tanghe, Hans**
Dijkstraat, 33-8
B-9700 Oudenaarde(BE)
Inventeur: **Meinguet, Christian**
Avenue du Bon Air, 24
B-1310 La Hulpe(BE)

(74) Mandataire: **Bouchoms, Maurice et al**
Solvay & Cie Département de la propriété
industrielle 310, rue de Ransbeek
B-1120 Bruxelles(BE)

(54) **Feuille composite pour le revêtement étanche d'éléments de construction et procédés pour sa réalisation.**

(57) La feuille destinée notamment à être posée sur des éléments de construction recouverts d'un matériau hydrocarboné hydrofuge comprend au moins une couche à base de polychlorure de vinyle plastifié et au moins une couche de copolyamide de degré de cristallinité inférieur à 20 %. La feuille peut être réalisée par laminage à chaud, coextrusion, extrusion-coating ou enduction.

EP 0 293 030 A1

### Feuille composite pour le revêtement étanche d'éléments de construction et procédés pour sa réalisation

La présente invention concerne une feuille composite pour le revêtement étanche d'éléments de construction qui comprend au moins une couche de polychlorure de vinyle plastifié qui conserve sa souplesse même en présence d'un matériau isolant hydrocarboné hydrofuge ou d'un adhésif tel qu'un adhésif bitumeux ou une colle de contact. Elle concerne particulièrement une feuille composite pour le revêtement étanche d'éléments de toitures recouverts d'un matériau isolant à base de bitume ou de polymère expansé (polystyrène, polyuréthane, etc.). Elle concerne également des procédés pour la fabrication de pareilles feuilles composites.

Le revêtement étanche d'éléments de construction soumis de manière continue aux effets des agents atmosphériques (pluie, neige, soleil, vent...) est assuré actuellement, dans une large mesure, par des feuilles en matériaux thermoplastiques imperméables et résistant plus ou moins bien aux intempéries et à l'action prolongée des rayons ultra-violets. Le plus souvent, il s'agit de feuilles à base de polychlorure de vinyle souple et donc plastifié qui présentent à la fois la résistance et la souplesse requises pour cet usage.

Les feuilles à base de polychlorure de vinyle souple étaient toutefois inutilisables jusqu'à présent pour le revêtement d'éléments de construction recouverts de matériaux hydrocarbonés hydrofuges, tels que des matériaux à base de bitume, de goudron, d'asphalte ainsi que des matériaux isolants à base de polymère expansé et/ou en présence d'adhésifs tels que précisés ci-avant.

Ces feuilles à base de polychlorure de vinyle souple contiennent en effet une quantité relativement importante de plastifiants qui sont le plus souvent des esters inorganiques qui sont progressivement extraits de ces feuilles par lesdits matériaux hydrocarbonés ou par l'adhésif. Ces feuilles deviennent dès lors dures et cassantes, se fissurent et ne peuvent plus assurer l'étanchéité des éléments de construction qu'elles recouvrent (demande de brevet DE-A-1184481 de KALLE, colonne 1, lignes 1 à 18).

Il a déjà été tenté de remédier à cet inconvénient de nombreuses façons. Ainsi, on a proposé de remplacer au moins une partie du polychlorure de vinyle de ces feuilles par du polyéthylène chloré (demande de brevet sus-mentionnée). Cette tentative, impliquant la fabrication et le mélange de deux types de polymères différents, dont le second (polyéthylène) doit en outre être modifié par chloration, est coûteuse et ne s'est pas révélée totalement satisfaisante. Il a aussi été tenté de remplacer les plastifiants monomériques du polychlorure de vinyle, qui sont le plus souvent des esters dérivés d'alcools monohydriques par des plastifiants polymériques dérivés d'acides organiques dicarboxyliques et d'alcools polyhydriques tels que les propylène- et butylèneglycols (H.A. Sarvetnick, Polyvinyl Chloride, Reinhold Plastics Application Series, Van Nostrand Reinhold Company, 1969, page 70).

Si ces plastifiants polymériques sont moins volatils et ont une moindre tendance à l'extraction que les plastifiants monomériques, il s'agit de produits coûteux dont l'efficacité est moindre et qui conduisent donc à des produits moins flexibles et moins résistants (op. cit., pages 70 et 71).

Il a aussi été tenté de pallier les inconvénients résultant de l'extraction progressive du plastifiant des feuilles à base de polychlorure de vinyle souple par les matériaux de recouvrement hydrocarbonés ou par des adhésifs en mettant en oeuvre des techniques faisant appel à des traitements spéciaux de la surface de ces feuilles (demande de brevet DE-A-1184481 sus-mentionnée, colonne 1, lignes 19-21).

Ces techniques ont toutefois été écartées également parce que l'amélioration induite n'implique qu'une couche superficielle extrêmement fine de la feuille et disparaît dès lors rapidement avec l'endommagement de cette couche par des agents chimiques ou mécaniques (idem, colonne 1, lignes 22 à 27).

Il a également été fait appel, pour résoudre le problème de l'extraction du plastifiant, à des méthodes évitant le contact direct de la feuille à base de polychlorure de vinyle souple avec des matériaux susceptibles d'en extraire des plastifiants. C'est ainsi qu'on a par exemple associé par laminage à chaud des feutres de natures diverses avec la face de la feuille destinée à être mise en contact avec le matériau exerçant une action d'extraction sur des plastifiants. On a également proposé d'appliquer sur la face de la feuille destinée à être mise en contact avec le matériau agressif un film plastique tel qu'un film acrylique, un film de polyester, un film de polyamide ou un film de résine fluorée. Il est toutefois apparu que de tels films présentent des propriétés barrières aux plastifiants défectueuses ou sont difficilement associés avec le polychlorure de vinyle souple.

Ainsi, par exemple, le nylon 6 qui présente d'excellentes propriétés barrières ne peut être associé de façon satisfaisante avec le polychlorure de vinyle souple qu'au moyen d'adhésifs qui se révèlent très agressifs vis-à-vis de polychlorure de vinyle souple et exercent eux-mêmes une action nocive d'extraction des plastifiants.

La présente invention vise à fournir des feuilles à base de polychlorure de vinyle plastifié équipées d'une couche plastique barrière à l'extraction des plastifiants, qui se révèle particulièrement efficace et qui adhère fortement au polychlorure de vinyle sans recours à des adhésifs. Les feuilles selon l'invention conviennent dès lors particulièrement pour le revêtement d'éléments de construction recouverts de matériaux hydrocarbonés hydrofuges, c'est-à-dire principalement en matériaux à base de bitume, de goudron et d'asphalte et de matériaux à base de polymère expansé et peuvent être fixées à l'intervention d'adhésifs exerçant une action d'extraction des plastifiants.

L'invention concerne dès lors une feuille composite pour le revêtement étanche d'éléments de construction comprenant au moins une couche à base de polychlorure de vinyle souple, qui se caractérise en ce qu'elle est équipée d'au moins une couche plastique barrière à l'extraction des plastifiants constituée par une copolyamide dont le degré de cristallisation est inférieur à 20 %.

Le polychlorure de vinyle entrant dans la composition des couches de la feuille composite selon l'invention peut être choisi parmi les homopolymères du chlorure de vinyle ou les copolymères contenant une proportion prépondérante (supérieure à 50 % en poids) de ce monomère. Ces copolymères sont obtenus par copolymérisation du chlorure de vinyle avec un ou plusieurs monomères copolymérisables tels que les ester vinyliques, par exemple l'acétate de vinyle; les éthers vinyliques, par exemple l'éther éthylvinylique; les acides acrylique et méthacrylique et leurs esters, par exemple l'acrylate de méthyle; l'acide fumarique et ses esters, par exemple le fumarate d'éthyle; l'acide maléique, son anhydride et ses esters par exemple le maléate d'éthyle; les composés vinylaromatiques, par exemple le styrène; les halogénures de vinylidène par exemple le chlorure de vinylidène; l'acrylonitrile; le méthacrylonitrile; les oléfines, par exemple l'éthylène.

Le polychlorure de vinyle entrant dans la composition des couches de la feuille composite selon l'invention peut aussi être consitué d'un mélange de polymères, en particulier d'un mélange de polymères du chlorure de vinyle avec au moins un élastomère et/ou un plastomère synthétique tel que les copolymères de l'éthylène et de l'acétate de vinyle; les copolymères de l'acrylonitrile et du butadiène; les copolymères du styrène et de l'acrylonitrile; les copolymères du méthacrylate de méthyle, du styrène et du butadiène; les copolymères de l'acrylonitrile, du styrène et du butadiène; les polyamides; les polymères du caprolactame; les terpolymères de l'éthylène, du propylène et d'un diène; les élastomères d'uréthanes; les polybutadiènes modifiés par des résines époxydes; la proportion d'élastomère et/ou de plastomère synthétique dans le mélange n'excède toutefois pas 50 % en poids par rapport au poids de polymère du chlorure de vinyle.

Les couches de la feuille composite selon l'invention peuvent être à base de polychlorures de vinyle différents ou, de préférence, à base du même polychlorure de vinyle.

Chaque couche à base de polychlorure de vinyle de la feuille composite selon l'invention contient aussi au moins un plastifiant conventionnel du polychlorure de vinyle, de manière à conférer à la feuille la flexibilité souhaitée. Ce plastifiant est choisi en général parmi les esters de l'acide phtalique dérivés d'un alcool linéaire ou ramifié contenant de 4 à 12 atomes de carbone, tels que le dibutyl-, le dioctyl- et le diisodécylphtalate par exemple; parmi les esters de diacides aliphatiques, tels que le dioctylfumarate, le dioctyladipate et le dibutylsébacate par exemple; parmi les esters de polyols, tels que les esters du pentaérythritol et les dibenzoates de diéthylène- et de dipropylèneglycols par exemple; parmi les esters d'acides gras, tels que l'acétylricinoléate de méthyle par exemple; parmi les esters de l'acide phosphorique, tels que le tricrésyl-, le triphényl- et le trinonylphosphate par exemple; parmi les huiles époxydées, telles que les huiles de soja et de lin époxydées par exemple; parmi les esters de l'acide citrique, tels que les citrates d'acétyltrioctyle et d'acétyltributyle par exemple; parmi les plastifiants à base de polyesters, tels que le trimellitate de triméthyle, le pyromellitate de tétra-n-octyle et l'adipate de propylèneglycol par exemple ou encore parmi les sulfonates de phénol et/ou de crésol tels que le pentadécane sulfonate de phénol et crésol.

Pour des raisons d'accessibilité et de coût, le plastifiant est choisi de préférence parmi les esters de l'acide phtalique et parmi les esters de diacides aliphatiques, en particulier le dioctyl- et le diisodécylphtalate, d'une part et les dioctylfumarate et -adipate, d'autre part.

Chaque couche de la feuille composite selon l'invention peut contenir un ou plusieurs des plastifiants énumérés ci-dessus en des proportions comprises en général entre 10 et 90 parties pour 100 parties en poids de polychlorure de vinyle, de préférence entre 30 et 75 parties pour 100 parties en poids de polychlorure de vinyle. De préférence, les couches de la feuille composite contiennent chacune approximativement la même proportion du (ou des) même(s) plastifiant(s).

Selon l'invention, on peut aussi incorporer d'autres additif conventionnels dans la ou les couches à base de polychlorure de vinyle pour améliorer diverses propriétés de la feuille composite, telles que la résistance aux agents atmosphériques et aux intempéries ou sa stabilité, pour faciliter sa fabrication ou réduire son coût, etc. Parmi ces additifs conventionnels, on peut citer :

- les stabilisants thermiques, tel que les sels métalliques d'acides carboxyliques, par exemple les stéarates de calcium, de baryum, de zinc et de cadmium; les composés du plomb, par exemple le sulfate et le phosphite; les composés organiques de l'étain par exemple le dilaurate de dibutylétain et le maléate de dioctylétain;
- les lubrifiants et agents antistatiques, tels que les acides gras supérieurs, leurs esters et amides, par exemple le stéarate de butyle et l'éthylène bisstéaroamide; les cires de polyéthylène;
- les charges, telles que le carbonate de calcium, l'asbeste, les silices, le talc, etc.;
- les agents ignifugeants, tels que l'oxyde d'antimoine, les esters phosphorés, etc.;
- les stabilisants à la lumière, tels que les benzophénones, par exemple la 2,4-dihydroxybenzophénone; les benzotriazoles, par exemple le 2(2′-hydroxy-5-méthylphényl)benzotriazole; les pigments, par exemple le dioxyde de titane et le noir de carbone qui peuvent aussi améliorer la stabilité à la lumière;
- d'autres additifs connus, tels que des colorants, des agents fongicides, des antioxidants, etc.

D'autres précisions sur la nature et la fonction des divers additifs conventionnels que peut contenir la feuille composite selon l'invention ainsi que les proportions dans lesquelles ils peuvent être présents sont mentionnées dans les chapitres 6 et 7 de l'ouvrage de H.A. Sarvetnick, "Polyvinyl Chloride", mentionné plus haut (pages 88 à 137), incorporés par référence dans la présente description.

La couche ou les couches à base de polychlorure de vinyle plastifié peuvent avoir une épaisseur totale de 0,1 à 5 mm et de préférence de 0,5 à 2 mm.

Le copolyamide utilisé pour la couche barrière est, de préférence, un copolyamide à base de pipérazine ou contenant du caprolactame, du laurolactame et de l'adipate d'hexaméthylène diamine ainsi que d'autre composants formateurs de polyamide comme constituants de base qui se caractérise par une adhérence remarquable sur le polychlorure de vinyle plastifié et sur des armatures textiles.

On préfère toutefois mettre en oeuvre un copolyamide dont la température du fusion est inférieure à 120°C, un tel copolyamide étant obtenu en choisissant les autres composants formateurs de polyamide dans le groupe formé par l'acide 11-amino-undécanoïque et/ou les sels d'hexaméthylène diamine avec les acides adipique, azélaïque, sébacique, dodécane-dicarboxylique et/ou undécane-dicarboxylique.

Des copolyamides convenant particulièrement sont décrits en détail dans les documents BE-A-814816, BE-A-814817, DE-A-1253449, DE-A-1595591, DE-A-2630114 et DE-A-2800149 qui sont incorporés par référence dans la présente description.

Un copolyamide convenant plus particulièrement pour réaliser la feuille composite selon l'invention est produit et commercialisé sous la marque commerciale PLATILON H2 par la firme PLATE BONN GmbH.

La couche de copolyamide associée à la ou aux couches de polychlorure de vinyle plastifié peut avoir une épaisseur de 0,02 à 0,1 mm et de préférence de 0,03 à 0,05 mm. Une telle épaisseur est suffisante pour empêcher efficacement l'extraction des plastifiants de la ou des couches de polychlorure de vinyle plastifié notamment par des adhésifs ou par un revêtement hydrocarboné hydrofuge. Il a été constaté que le taux de cristallinité du copolyamide doit être inférieur à 20 % pour que celui-ci puisse adhérer à la couche à base de polychlorure de vinyle plastifié sans devoir recourir à des adhésifs.

La feuille composite selon l'invention peut être utilisée telle quelle pour le revêtement étanche d'éléments de construction. Toutefois, afin de réduire les chocs thermiques subis par la feuille composite et de minimiser les risques de perforation accidentelle de cette feuille, on préfère généralement recouvrir la couche de copolyamide d'une armature en fibres textiles naturelles ou synthétiques, cette armature pouvant être un tissu ou un non-tissé. En général, on préfère utiliser un feutre réalisé à partir de fibres de verre, de fibres de polyester thermoplastique tel que le polytéréphtalate d'éthylène glycol ou encore de fibres de polypropylène. D'excellents résultats sont atteints en utilisant comme armature un feutre en fibres de polyester thermoplastique ayant un grammage de 100 à 250 g/m² et de préférence de 150 à 200 g/m². Il est également apparu que le copolyamide permet aussi d'associer fermement les couches à base de polychlorure de vinyle plastifié et l'armature textile sans devoir recourir à un adhésif quelconque.

L'invention concerne également des procédés pour réaliser la feuille composite telle que décrite ci-avant.

Selon un premier procédé, les couches à base de polychlorure de vinyle plastifié, de copolyamide et éventuellement l'armature textile sont associées par laminage à chaud à une température au moins égale à la température de fusion du copolyamide mais inférieure à sa température de dégradation. Selon une technique particulièrement avantageuse, la ou les couches à base de polychlorure de vinyle plastifié préchauffées à 150-175°C sont associées avec la couche de copolyamide et l'armature textile non préchauffées par passage entre des cylindres de pression.

Selon un second procédé, les couches à base de polychlorure de vinyle plastifié et de copolyamide sont assemblées par coextrusion ou extrusion-coating et la face constituée par le copolyamide est ensuite éventuellement revêtue d'une armature textile par laminage à chaud.

Selon un troisième procédé, la couche de copolyamide est appliquée sur la couche de polychlorure de vinyle plastifié par enduction à partir d'une solution dans un solvant approprié.

Les feuilles composites selon l'invention peuvent être simplement posées sur les éléments de construction à revêtir et être éventuellement assemblées entre elles par collage au moyen d'adhésifs, tels que des résines époxydes; par soudage à chaud; par soudage à haute fréquence; par soudage chimique à l'intervention de solvant; etc. Cet assemblage peut se faire bord à bord, par exemple avec recouvrement des bords jointifs au moyen d'une bande ou d'un lé qui peut avoir par exemple la même composition que la feuille composite, ce dernier étant exempt d'armature textile sous la feuille. Cet assemblage peut également se faire par recouvrement des bords respectifs de deux feuilles adjacentes, le feutre de la feuille supérieure s'arrêtant à quelques centimètres de la rive de la feuille.

Les feuilles composites selon l'invention peuvent convenir au revêtement étanche de n'importe quel élément de construction éventuellement recouvert d'un matériau hydrocarboné hydrofuge, tel que des éléments d'ouvrages de génie civil, comme par exemple des digues, ponts, canaux, tunnels, fondations, etc.; elles conviennent particulièrement bien au revêtement étanche de toitures de bâtiments recouvertes de matériaux à base de bitume et de matériaux à base de polymère expansé.

Il est bien évident que la feuille composite selon l'invention doit être déposée de façon telle que la couche barrière soit interposée entre la ou les couches de résine à base de polychlorure de vinyle et l'élément de construction recouvert de matériaux hydrocarbonés hydrofuges.

L'invention est en outre illustrée par les exemples non limitatifs ci-après.

Exemple 1

On prépare un film A d'une épaisseur de 0,64 mm et d'une largeur de 2,17 m par calandrage d'une composition comprenant :

(a) 100 parties en poids d'un homopolymère de chlorure de vinyle;

(b) 68 parties en poids de diisodécylphtalate;

(c) 4 parties en poids d'un système stabilisant contenant du baryum, du cadmium et du plomb;

(d) 10 parties en poids de carbonate de calcium;

(e) 3 parties en poids d'un système ignifugeant à base d'antimoine;

(f) 1 partie en poids d'un agent fongicide (oxy-biphénoxy-arsine)

(g) 8,5 parties en poids de pigments à base de dioxyde de titane et de noir de carbone.

On prépare également un film B d'une épaisseur de 0,03 mm et d'une largeur de 2,10 m par extrusion-soufflage à partir de PLATILON H2 (copolyamide produit et commercialisé par la firme PLATE BONN GmbH).

On amène successivement deux plis du film A sur un tambour de préchauffage maintenu à 167° C et le film complexe préchauffé est ensuite introduit entre les cylindres de pression en même temps que le film B non préchauffé et qu'une armature textile non préchauffée constituée par un feutre en fibres de polytéréphtalate d'éthylène glycol ayant un grammage de 160 g/m$^2$ et une largeur de 2,02 m.

On obtient de cette façon une feuille composite d'une largeur de 2,05 m dont les bouts sur une largeur de 0,05 m sont dépourvus d'armature textile.

On soumet la feuille composite ainsi obtenue à un essai de pelage en traction selon la norme DIN 53357 (éprouvettes de 0,05 m de largeur et vitesse de traction de 100 mm/min) et on constate que les adhérences sont supérieures à la résistance mécanique du feutre qui est de 440 N/5 cm.

La résistance à l'extraction du plastifiant de la feuille composite déposée par sa face feutrée sur du bitume chaud est ensuite mesurée par un test accéléré de 28 jours à 70° C (selon la norme DIN 16726). On constate que la teneur résiduelle en plastifiant s'élève à 98,3 % de la teneur en plastifiant d'origine.

Exemple 2

Cet exemple est donné à titre de comparaison.

On réalise une feuille composite comme dans l'exemple 1, mais dépourvue de couche de copolyamide.

On soumet la feuille composite ainsi obtenue au test accéléré d'extraction du plastifiant mentionné à l'exemple 1.

A l'issue de ce test, la teneur résiduelle en plastifiant de la feuille ne s'élève qu'à 75 % de la teneur initiale.

## Exemple 3

Cet exemple est donné à titre de comparaison.

On réalise une feuille composite comme à l'exemple 1 mais en remplaçant le film de copolyamide par un film équivalent réalisé en Nylon 6 (SYDANIL produit et commercialisé par l'UNION CHIMIQUE DE BELGIQUE).

On soumet la feuille composite ainsi obtenue à un essai de pelage en traction et on constate ainsi que l'adhérence entre le film de Nylon 6 et la couche de polychlorure de vinyle plastifié est pratiquement nulle.

## Revendications

1 - Feuille composite pour le revêtement étanche d'éléments de construction comprenant au moins une couche à base de polychlorure de vinyle plastifié caractérisée en ce qu'elle est équipée d'au moins une couche barrière à l'extraction des plastifiants constituée par un copolyamide dont le degré de cristallinité est inférieur à 20 %.

2 - Feuille composite selon la revendication 1 caractérisée en ce que le copolyamide est à base de pipérazine et contient d'autres composants formateurs de polyamide.

3 - Feuille composite selon la revendication 1 caractérisée en ce que le copolyamide contient du caprolactame, du laurolactame et de l'adipate d'hexaméthylène diamine ainsi que d'autres composants formateurs de polyamide.

4 - Feuille composite selon la revendication 2 ou 3 caractérisée en ce que les autres composants formateurs de polyamide sont choisis dans le groupe formé par l'acide 11-amino-undécanoïque et/ou les sels d'hexaméthylène diamine avec les acides adipique, azélaïque, sébacique, dodécane-dicarboxylique et/ou undécane-dicarboxylique.

5 - Feuille composite selon l'une quelconque des revendications 1 à 4 caractérisée en ce que la couche à base de polychlorure de vinyle plastifié a une épaisseur de 0,1 à 5 mm et en ce que la couche de copolyamide a une épaisseur de 0,02 à 0,1 mm.

6 - Feuille composite selon l'une quelconque des revendications 1 à 5 caractérisée en ce que la couche de copolyamide est recouverte d'une armature en fibres textiles naturelles ou synthétiques.

7 - Feuille composite selon la revendication 6 caractérisée en ce que l'armature textile est constituée par un feutre réalisé à partir de fibres de polyester thermoplastique et présentent un grammage compris entre 100 et 250 g/m$^2$.

8 - Procédé pour réaliser une feuille composite selon l'une quelconque des revendications 1 à 7 caractérisé en ce que les couches à base de polychlorure de vinyle plastifié, de copolyamide et éventuellement l'armature textile sont associées par laminage à chaud à une température au moins égale à la température de fusion du copolyamide mais inférieure à sa température de dégradation.

9 - Procédé pour réaliser une feuille composite selon l'une quelconque des revendications 1 à 7 caractérisé en ce que les couches à base de polychlorure de vinyle plastifié et de copolyamide sont associées par coextrusion ou par extrusion-coating, la face constituée par le copolyamide étant ensuite éventuellement revêtue d'une armature textile par laminage à chaud.

10 - Procédé pour réaliser une feuille composite selon l'une quelconque des revendications 1 à 7 caractérisé en ce qu'on applique la couche de copolyamide sur la couche à base de polychlorure de vinyle plastifié par enduction à partir d'une solution dans un solvant approprié, la face constituée par la copolyamide étant ensuite éventuellement revêtue d'une armature textile par laminage à chaud.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | FR-A-1 050 595  (SOC. RHODIACETA) <br> * En entier * <br> --- | 1,3,4, 10 | B 32 B   27/08 <br> E 04 B    1/64 |
| A | EP-A-0 084 421  (TOYO SEIKAN KAISHA LTD) <br> * Revendications 5,8,9,12-14; page 20, ligne 1 - page 22, ligne 18; page 27, ligne 20 - page 28, ligne 1; exemple 1 * <br> --- | 1,3,4,9 | |
| A | FR-A-2 192 911  (ETS. MARECHAL) <br> * Revendications 1,2,7; page 2, ligne 12 - page 4, ligne 26; exemple 1 * <br> ----- | 1,5 | |

DOMAINES TECHNIQUES RECHERCHES (Int. Cl.4)

B 32 B
E 04 B

Le présent rapport a été établi pour toutes les revendications

| Lieu de la recherche | Date d'achèvement de la recherche | Examinateur |
|---|---|---|
| LA HAYE | 04-08-1988 | BLASBAND I. |